(19) Europäisches Patentamt
European Patent Office
Office européen des brevets

(11) **EP 4 502 215 A1**

(12) **EUROPEAN PATENT APPLICATION**
published in accordance with Art. 153(4) EPC

(43) Date of publication:
**05.02.2025 Bulletin 2025/06**

(21) Application number: 23779630.5

(22) Date of filing: **15.03.2023**

(51) International Patent Classification (IPC):
*C22C 38/00* (2006.01)       *C21D 1/06* (2006.01)
*C21D 1/18* (2006.01)       *C21D 9/40* (2006.01)
*C22C 38/18* (2006.01)       *F16C 33/62* (2006.01)
*F16C 33/64* (2006.01)

(52) Cooperative Patent Classification (CPC):
**C21D 1/06; C21D 1/18; C21D 9/40; C22C 38/00;
C22C 38/18; F16C 33/62; F16C 33/64**

(86) International application number:
**PCT/JP2023/010144**

(87) International publication number:
**WO 2023/189612 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.03.2022 JP 2022053519**

(71) Applicant: **NTN Corporation
Osaka-shi Osaka 530-0005 (JP)**

(72) Inventors:
• **MIZUTA, Kohei**
  **Kuwana-shi, Mie 511-0867 (JP)**
• **FUJIMURA, Naoki**
  **Kuwana-shi, Mie 511-0867 (JP)**
• **OHKI, Chikara**
  **Kuwana-shi, Mie 511-0867 (JP)**

(74) Representative: **Bockhorni & Brüntjen
Partnerschaft
Patentanwälte mbB
Agnes-Bernauer-Straße 88
80687 München (DE)**

(54) **MACHINE COMPONENT**

(57)     A mechanical component (10) has a surface and is made of steel subjected to quenching and tempering. The mechanical component includes a nitrided layer (11) formed at the surface (10a, 10b, 10c, 10d). Steel contains at least 0.95 mass % and at most 1.10 mass % of carbon, less than 0.30 mass % of silicon, less than 0.50 mass % of manganese, less than 0.0080 mass % of sulfur, at least 1.3 mass % and at most 1.6 mass % of chromium, and a remainder composed of iron and an inevitable impurity. An average nitrogen concentration at the surface is equal to or more than 0.10 mass %. A hardness at the surface is equal to or more than 850 Hv. An amount of retained austenite at the surface is equal to or less than 20 volume %.

FIG.1

# EP 4 502 215 A1

## Description

### TECHNICAL FIELD

The present invention relates to a mechanical component.

### BACKGROUND ART

For example, Japanese Patent Laying-Open No. 2013-119930 (PTL 1) describes a bearing component. The bearing component described in PTL 1 comes in contact with another component at its surface. The bearing component described in PTL 1 is made of steel subjected to quenching and tempering. Steel contains at least 0.90 mass % and at most 1.05 mass % of carbon, at least 0.15 mass % and at most 0.35 mass % of silicon, at least 0.01 mass % and at most 0.50 mass % of manganese, at least 1.30 mass % and at most 1.65 mass % of chromium, and a remainder composed of iron and an inevitable impurity.

In the bearing component described in PTL 1, the surface is nitrided, and a concentration of nitrogen at the surface is equal to or more than 0.25 mass %. In the bearing component described in PTL 1, an amount of retained austenite at the surface is at least 6 volume % and at most 12 volume %. The bearing component described in PTL 1 has an improved static load capacity at the surface owing to tempering at a high temperature.

### CITATION LIST

### PATENT LITERATURE

PTL 1: Japanese Patent Laying-Open No. 2013-119930

### SUMMARY OF INVENTION

### TECHNICAL PROBLEM

A bearing is used in a motor, a gear box, a differential gear, and the like mounted on a battery electric vehicle. In addition, a bearing is used also in electric variable timing control (VTC), an electric compressor, a transmission, an axle, and the like mounted on a plug-in hybrid vehicle (PHV), a hybrid vehicle (HV), or an engine vehicle. Improvement in static load capacity of the bearing in such applications enables reduction in size of the bearing and reduction in size of a peripheral mechanical component.

A bearing mounted on a hydrogen-utilizing device used in a hydrogen environment such as a fuel cell vehicle or a hydrogen station can also be reduced in size as a result of improvement in static load capacity, and efficiency of the hydrogen-utilizing device may improve. There is a room, however, for improvement in static load capacity at the surface in the bearing component described in PTL 1.

The present invention was made in view of the problem of the conventional art as above. More specifically, the present invention provides a mechanical component improved in static load capacity at a surface.

### SOLUTION TO PROBLEM

A mechanical component in the present invention has a surface and is made of steel subjected to quenching and tempering. The mechanical component is provided with a nitrided layer formed at the surface. Steel contains at least 0.95 mass % and at most 1.10 mass % of carbon, less than 0.30 mass % of silicon, less than 0.50 mass % of manganese, less than 0.0080 mass % of sulfur, at least 1.3 mass % and at most 1.6 mass % of chromium, and a remainder composed of iron and an inevitable impurity. An average nitrogen concentration at the surface is equal to or more than 0.10 mass %. A hardness at the surface is equal to or more than 850 Hv. An amount of retained austenite at the surface is equal to or less than 20 volume %.

In the mechanical component above, a half value width in an X-ray profile of martensite obtained by X-ray diffraction onto the surface may be not smaller than 7.2° and not larger than 8.0°. A peak position indicating a {220} plane in an X-ray profile of austenite obtained by X-ray diffraction onto the surface may be equal to or larger than 128°.

In the mechanical component above, a dislocation density of martensite at the surface may be equal to or more than $1.1 \times 10^{15}$ m$^{-2}$. A dislocation density of austenite at the surface may be equal to or more than $2.5 \times 10^{14}$ m$^{-2}$.

In the mechanical component above, relation of $4.332+0.005 \times A-0.580 \times B-0.295 \times LogC \leq 0$ may be satisfied, where A (unit: volume %) represents the amount of retained austenite at the surface, B (unit: mass %) represents the average nitrogen concentration at the surface, and C (unit: m$^{-2}$) represents a dislocation density of austenite at the surface.

In the mechanical component above, relation of -47.73-0.025×A-2.141×B+3.155×LogD ≥ 0 may be satisfied, where A (unit: volume %) represents the amount of retained austenite at the surface, B (unit: mass %) represents the average nitrogen concentration at the surface, and D (unit: $m^{-2}$) represents a dislocation density of martensite at the surface.

In the mechanical component above, a depth of an indentation formed in the surface when a maximum contact pressure of 4.5 GPa is applied to the surface may be equal to or less than 0.2 μm. In the mechanical component above, a static load capacity at the surface may be equal to or more than 6.0 GPa.

ADVANTAGEOUS EFFECTS OF INVENTION

According to the mechanical component in the present invention, the static load capacity at the surface can be improved.

BRIEF DESCRIPTION OF DRAWINGS

Fig. 1 is a cross-sectional view of an inner ring 10.
Fig. 2 is a process diagram showing a method of manufacturing inner ring 10.
Fig. 3 shows a graph of relation between a maximum contact pressure at surfaces of a sample 1 to a sample 6 and a value calculated by dividing a depth of an indentation by a diameter of a ceramic ball.
Fig. 4 is a cross-sectional view of a ball screw 20.
Fig. 5 is a cross-sectional view of a rolling bearing 100.

DESCRIPTION OF EMBODIMENTS

Details of an embodiment of the present invention will be described with reference to the drawings. The same or corresponding elements in the drawings below have the same reference characters allotted and redundant description will not be repeated.

A mechanical component according to the embodiment is, for example, a raceway surface of a rolling bearing. The mechanical component according to the embodiment may be a sliding member such as a rolling element, a shaft, or a ball screw of the rolling bearing. Though the mechanical component according to the embodiment is not limited as such, an inner ring 10 of a deep groove ball bearing will be described below by way of example of the mechanical component according to the embodiment.

(Construction of Inner Ring 10)

A construction of inner ring 10 will be described below.

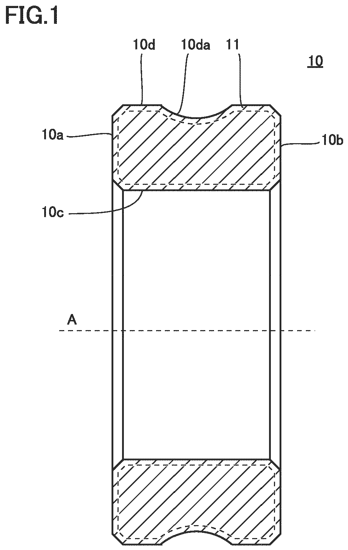

Fig. 1 is a cross-sectional view of inner ring 10. As shown in Fig. 1, inner ring 10 has a surface. More specifically, inner ring 10 has a width surface 10a, a width surface 10b, an inner circumferential surface 10c, and an outer circumferential surface 10d as the surface. A central axis of inner ring 10 is defined as a central axis A. A direction along central axis A is defined as an axial direction. A direction that is orthogonal to the axial direction and passes through central axis A is defined as a radial direction. A direction along a circumference around central axis A is defined as a circumferential direction.

Width surface 10a and width surface 10b each form an end surface of inner ring 10 in the axial direction. Width surface 10b is a surface opposite to width surface 10a. Inner circumferential surface 10c extends along the circumferential direction. Inner circumferential surface 10c faces toward central axis A. One and the other axial ends of inner circumferential surface 10c are contiguous to width surface 10a and width surface 10b, respectively. Inner ring 10 is fitted to a shaft (not shown) at inner circumferential surface 10c.

Outer circumferential surface 10d extends along the circumferential direction. Outer circumferential surface 10d faces a side opposite to central axis A. In other words, outer circumferential surface 10d is a surface opposite to inner circumferential surface 10c in the radial direction. One and the other axial ends of outer circumferential surface 10d are contiguous to width surface 10a and width surface 10b, respectively.

Outer circumferential surface 10d has a raceway surface 10da. Raceway surface 10da is a portion of outer circumferential surface 10d that comes in contact with a rolling element. Raceway surface 10da is located in the center of outer circumferential surface 10d in the axial direction. Raceway surface 10da extends along the circumferential direction. Outer circumferential surface 10d is recessed toward inner circumferential surface 10c in raceway surface 10da. In a cross-sectional view orthogonal to the circumferential direction, raceway surface 10da is, for example, in a shape of a partial arc.

Inner ring 10 is made of steel subjected to quenching and tempering. In other words, steel that forms inner ring 10 contains martensite and retained austenite. The surface (width surface 10a, width surface 10b, inner circumferential surface 10c, and outer circumferential surface 10d) of inner ring 10 has been subjected to nitriding treatment. In other words, a nitrided layer 11 is formed at the surface of inner ring 10. Nitrogen is in a state of solid solution in steel in nitrided layer 11, and does not form a nitride in nitrided layer 11.

Steel that forms inner ring 10 contains at least 0.95 mass % and at most 1.10 mass % of carbon, less than 0.30 mass % of silicon, less than 0.50 mass % of manganese, less than 0.0080 mass % of sulfur, and at least 1.3 mass % and at most 1.6 mass % of chromium. A remainder of steel that forms inner ring 10 is composed of iron and an inevitable impurity. Steel that forms inner ring 10 does not have to contain silicon, manganese, and sulfur.

Specific examples of steel that forms inner ring 10 include bearing steel. Specific examples of bearing steel include SUJ2 defined under JIS standards, 52100 defined under ASTM standards, 100Cr6 defined under ISO standards, and GCr15 defined under GB standards.

An average nitrogen concentration at the surface of inner ring 10 is equal to or more than 0.10 mass %. The average nitrogen concentration at the surface of inner ring 10 is measured by line analysis with the use of an electron probe micro analyzer (EPMA). At this time, a calibration curve is drawn by using a standard sample, a concentration of nitrogen in which is clearly known.

An amount of retained austenite at the surface of inner ring 10 is equal to or less than 20 volume %. The amount of retained austenite at the surface of inner ring 10 is measured by an X-ray diffraction method. This measurement is conducted by using an X-ray diffraction apparatus of a Cr tube type. In the X-ray diffraction apparatus of the Cr tube type, a wavelength of Cr-K$\alpha$ rays is set to $2.29093 \times 10^{-10}$ m, a tube voltage is set to 30 kV, a tube current is set to 10 mA, and a collimator size is set to 2 mm × 2 mm.

A hardness at the surface of inner ring 10 is equal to or more than 850 Hv. The hardness at the surface of inner ring 10 is measured in accordance with a Vickers hardness test method defined under the JIS standards. A load in measurement of the hardness at the surface of inner ring 10 is set to 300 g. The hardness at the surface of inner ring 10 is measured at at least three different points and an average value of measurement values is adopted.

A half value width in an X-ray profile of martensite obtained by X-ray diffraction onto the surface of inner ring 10 is preferably not smaller than 7.2° and not larger than 8.0°. A position ($2\theta$) of a peak indicating a {220} plane in an X-ray profile of austenite obtained by X-ray diffraction onto the surface of inner ring 10 is preferably equal to or larger than 128°. A lattice plane spacing of austenite at the surface of inner ring 10 is preferably equal to or less than $1.275 \times 10^{-10}$ m.

The X-ray profile of martensite and the X-ray profile of austenite obtained by X-ray diffraction onto the surface of inner ring 10 are obtained with the use of the X-ray diffraction apparatus of the Cr tube type. In the X-ray diffraction apparatus of the Cr tube type, a wavelength of Cr-K$\alpha$ rays is set to $2.29093 \times 10^{-10}$ m, a tube voltage is set to 30 kV, a tube current is set to 10 mA, and a collimator size is set to 2 mm × 2 mm. The X-ray profile of martensite obtained by X-ray diffraction onto the surface of inner ring 10 is measured within a range where $2\theta$ is not smaller than 142.75° and not larger than 170.8°, and the X-ray profile of austenite obtained by X-ray diffraction onto the surface of inner ring 10 is measured within a range where $2\theta$ is not smaller than 114.75° and not larger than 142.8°.

The X-ray profile of martensite and the X-ray profile of austenite obtained by X-ray diffraction onto the surface of inner ring 10 are subjected to background processing. The position of the peak indicating the {220} plane in the X-ray profile of austenite obtained by X-ray diffraction onto the surface of inner ring 10 is obtained from a central position of the half value width.

The lattice plane spacing of austenite at the surface of inner ring 10 is calculated by applying the Bragg's equation below to the X-ray profile of austenite obtained by X-ray diffraction onto the surface of inner ring 10. In this equation, d represents the lattice plane spacing (unit: m) of austenite at the surface of inner ring 10, $\lambda$ represents the wavelength (unit: m) of Cr-K$\alpha$ rays used in the X-ray diffraction apparatus of the Cr tube type, and $\theta$ represents a diffraction angle (unit: °) in the X-ray profile of austenite obtained by X-ray diffraction onto the surface of inner ring 10.

[Expression 1]

$$d = \frac{\lambda}{2 sin\theta}$$

A dislocation density of martensite at the surface of inner ring 10 is preferably equal to or more than $1.1 \times 10^{15}$ m$^{-2}$. A dislocation density of austenite at the surface of inner ring 10 is preferably equal to or more than $2.5 \times 10^{14}$ m$^{-2}$.

The dislocation density of martensite and the dislocation density of austenite at the surface of inner ring 10 are measured with the use of an X-ray diffraction apparatus of a Co tube type. More specifically, firstly, the X-ray profiles of martensite and austenite at the surface of inner ring 10 are obtained with the use of the X-ray diffraction apparatus of the Co tube type. In the X-ray diffraction apparatus of a Co tube type, a wavelength of Co-K$\alpha$ rays is set to $1.7889 \times 10^{-10}$ m, a tube

voltage is set to 40 kV, a tube current is set to 50 mA, and a collimator size is set to a diameter of 1 mm. The X-ray profiles of martensite and austenite obtained by X-ray diffraction onto the surface of inner ring 10 are measured within a range where 2θ is not smaller than 30° and not larger than 135°.

Secondly, Rietveld analysis is conducted, and then a half value width of a peak in each of the X-ray profiles of martensite and austenite obtained by X-ray diffraction onto the surface of inner ring 10 is separated into a crystallite size and strain. Thirdly, the dislocation density of martensite and the dislocation density of austenite at the surface of inner ring 10 are obtained by applying the crystallite size and the strain to a Williamson-Hall equation below, where ρ represents the dislocation density (unit: $m^{-2}$), ε represents the strain, and b represents a length of a Burgers vector (b = $0.25 \times 10^{-9}$ m).

[Expression 2]

$$\rho = 14.4 \times \frac{\varepsilon^2}{b^2}$$

In the X-ray profile of martensite obtained by X-ray diffraction onto the surface of inner ring 10, peaks indicating a {110} plane, a {200} plane, a {211} plane, and a {220} plane are to be measured. In the X-ray profile of austenite obtained by X-ray diffraction onto the surface of inner ring 10, peaks indicating a {111} plane, a {200} plane, a {220} plane, a {311} plane, and a {222} plane are to be measured. Rietveld analysis is conducted in order to lessen influence by the {200} plane of martensite and the {200} plane of austenite different in modulus of elasticity.

A depth of an indentation formed at the time of application of a maximum contact pressure of 4.5 GPa to the surface (raceway surface 10da) of inner ring 10 is preferably equal to or less than 0.2 μm. This depth of the indentation is measured with the use of a white light interferometric function of a laser microscope at the surface of inner ring 10 after a ceramic ball is brought in contact with the surface of inner ring 10 with the use of an autograph such that the maximum contact pressure attains to 4.5 GPa. A loading speed at this time is set to 3 N/second and a load is held for 120 seconds after a target load is reached.

A static load capacity at the surface of inner ring 10 is preferably equal to or more than 6.0 GPa. In measurement of the static load capacity at the surface of inner ring 10, firstly, similarly to the above, an indentation is formed in the surface of inner ring 10 with the maximum contact pressure being varied as above with the autograph. Secondly, for each varied maximum contact pressure, a value is calculated by dividing the depth of the indentation by a diameter of the ceramic ball. The maximum contact pressure at the time when the value calculated by dividing the depth of the indentation by the diameter of the ceramic ball is 1/10000 is defined as the static load capacity at the surface of inner ring 10.

The amount of retained austenite at the surface of inner ring 10, the average nitrogen concentration at the surface of inner ring 10, and the dislocation density of austenite at the surface of inner ring 10 are denoted as A (unit: volume %), B (unit: mass %), and C (unit: $m^{-2}$). Relation of $4.332+0.005 \times A-0.580 \times B-0.295 \times LogC \leq 0$ is preferably satisfied in inner ring 10.

The dislocation density of martensite at the surface of inner ring 10 is denoted as D (unit: $m^{-2}$). Relation of $-47.73-0.025 \times A-2.141 \times B+3.155 \times LogD \geq 0$ is satisfied at the surface of inner ring 10.

(Method of Manufacturing Inner Ring 10)

A method of manufacturing inner ring 10 will be described below.

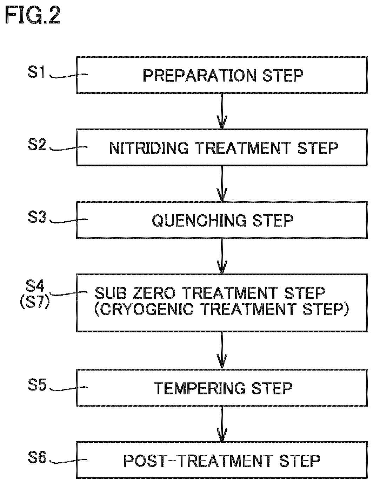

Fig. 2 is a process diagram showing a method of manufacturing inner ring 10. As shown in Fig. 2, the method of manufacturing inner ring 10 includes a preparation step S1, a nitriding treatment step S2, a quenching step S3, a sub zero treatment step S4, a tempering step S5, and a post-treatment step S6.

In preparation step S1, a member to be worked is prepared. Nitriding treatment step S2 is performed after preparation step S1. In nitriding treatment step S2, the member to be worked is held at a temperature equal to or more than an $A_1$ transformation point in atmospheric gas containing a nitrogen source. Nitriding treatment step S2 is performed such that nitrogen is introduced and diffused to a position to be the surface of inner ring 10 after post-treatment step S6. Quenching step S3 is performed after nitriding treatment step S2. In quenching step S3, the member to be worked is held at the temperature equal to or more than the $A_1$ transformation point and thereafter cooled to a temperature equal to or less than an Ms transformation point.

Sub zero treatment step S4 is performed after quenching step S3. In sub zero treatment step S4, the member to be worked is cooled to a temperature exceeding -100°C and not higher than a room temperature. Some of retained austenite formed in steel that forms the member to be worked in quenching step S3 thus transforms to martensite. Cryogenic treatment step S7 may be performed instead of sub zero treatment step S4. In cryogenic treatment step S7, the member to be worked is cooled to a temperature equal to or lower than -100°C. Some of retained austenite formed in steel that forms the member to be worked in quenching step S3 thus transforms to martensite.

For example, liquid nitrogen, liquid helium, or the like is employed as refrigerant in sub zero treatment step S4 and cryogenic treatment step S7. Preferably, sub zero treatment step S4 and cryogenic treatment step S7 are performed within two hours after end of quenching step S3.

Tempering step S5 is performed after sub zero treatment step S4 (cryogenic treatment step S7). In tempering step S5, the member to be worked is held at a temperature lower than the $A_1$ transformation point. Some of martensite in steel that forms the member to be worked is thus decomposed. A holding temperature in tempering step S5 is, for example, not lower than 180°C and not higher than 220°C. A holding time period in tempering step S5 is set, for example, to two hours.

Post-treatment step S6 is performed after tempering step S5. In post-treatment step S6, the surface of the member to be worked is machined (for example, ground and polished). Inner ring 10 in a structure shown in Fig. 1 is manufactured as set forth above.

(Effect of Inner Ring 10)

An effect of inner ring 10 will be described below.

As described in PTL 1, in order to improve the static load capacity at the surface of the raceway surface, tempering at a high temperature (for example, equal to or higher than 230°C) may be performed. In this case, however, martensite formed by quenching is excessively decomposed by tempering, which may result in a lower hardness at the surface of the raceway surface and an insufficient static load capacity at the surface of the raceway surface.

On the other hand, in inner ring 10, nitrogen is dissolved in nitrided layer 11 as a solid solution, and the surface of inner ring 10 is reinforced by the solid solution. Furthermore, in inner ring 10, as a result of sub zero treatment step S4 (cryogenic treatment step S7), the amount of retained austenite at the surface has decreased (martensite has increased) and the dislocation densities in retained austenite and martensite at the surface have increased. Consequently, inner ring 10 has the hardness at the surface equal to or more than 850 Hv. Therefore, according to inner ring 10, the static load capacity at the surface is improved as compared with the case of tempering at the high temperature.

More specifically, with the amount of retained austenite at the surface of inner ring 10 being equal to or less than 20 volume %, the average nitrogen concentration at the surface of inner ring 10 being equal to or more than 0.10 mass %, and the hardness at the surface of inner ring 10 being equal to or more than 850 Hv, the depth of the indentation at the time of application of the maximum contact pressure of 4.5 GPa to the surface of inner ring 10 is equal to or less than 0.2 μm and the static load capacity at the surface of inner ring 10 is equal to or more than 6.0 GPa.

Nitrogen is an element that stabilizes austenite and nitriding treatment is performed to enrich retained austenite at the surface of the raceway surface. Therefore, when nitriding treatment is performed, normally, sub zero treatment (or cryogenic treatment) to decrease the amount of retained austenite at the surface is not performed.

(Evaluation of Static Load Capacity and Depth of Indentation)

In order to evaluate the static load capacity at the surface of the mechanical component according to the embodiment, a sample 1 to a sample 6 were prepared. The sample 1 to the sample 6 were each in a form of a flat plate having a diameter of 85 mm × a thickness of 5 mm. The sample 1 to the sample 6 were formed of SUJ2 defined under the JIS standards. Table 1 shows details of heat treatment onto the sample 1 to the sample 6.

[Table 1]

Table 1

| Sample | Steel Type | Nitriding Treatment | Sub Zero Treatment Cryogenic Treatment | Tempering |
|--------|-----------|---------------------|----------------------------------------|-----------|
| 1 | SUJ2 | Yes | Yes (Cryogenic Treatment) | 180°C |
| 2 | SUJ2 | Yes | Yes (Sub Zero Treatment) | 180°C |
| 3 | SUJ2 | Yes | Yes (Sub Zero Treatment) | 180°C |
| 4 | SUJ2 | Yes | No | 230°C |
| 5 | SUJ2 | Yes | No | 180°C |
| 6 | SUJ2 | No | No | 180°C |

For the sample 1, nitriding treatment step S2, quenching step S3, cryogenic treatment step S7, and tempering step S5 were performed as heat treatment. For the sample 2 and the sample 3, nitriding treatment step S2, quenching step S3, sub zero treatment step S4, and tempering step S5 were performed as heat treatment. In other words, the sample 1 to the sample 3 were samples that simulated the mechanical component according to the embodiment. In tempering step S5 for the sample 1 to the sample 3, the holding temperature was set to 180°C.

For the sample 4, nitriding treatment step S2, quenching step S3, and tempering step S5 were performed as heat treatment, and sub zero treatment step S4 (or cryogenic treatment step S7) was not performed. In tempering step S5 for the sample 4, tempering at the high temperature (specifically, at 230°C) was performed.

For the sample 5, nitriding treatment step S2, quenching step S3, and tempering step S5 were performed as heat treatment, and sub zero treatment step S4 (or cryogenic treatment step S7) was not performed. In tempering step S5 for the sample 5, the holding temperature was set to 180°C. For the sample 6, quenching step S3 and tempering step S5 were performed as heat treatment, and nitriding treatment step S2 and sub zero treatment step S4 (or cryogenic treatment step S7) were not performed. In tempering step S5 for the sample 5, the holding temperature was set to 180°C.

The average nitrogen concentration at the surface, the hardness at the surface, the amount of retained austenite at the surface, the depth of the indentation at the time of application of the maximum contact pressure of 4.5 GPa to the surface, and the static load capacity at the surface of the sample 1 to the sample 6 were measured.

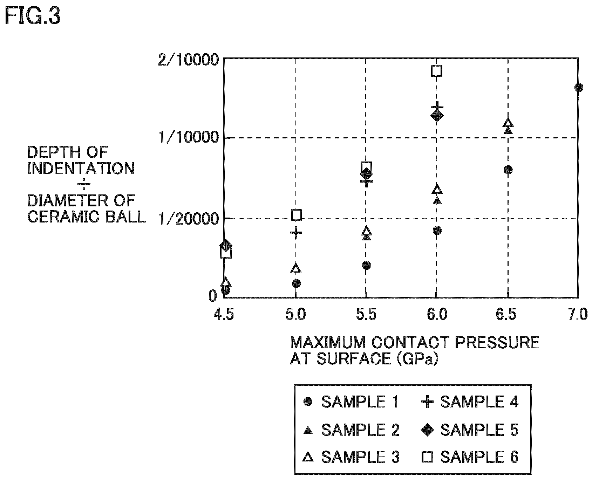

Table 2 shows results of measurement of the average nitrogen concentration at the surface, the hardness at the surface, the amount of retained austenite at the surface, the depth of the indentation at the time of application of the maximum contact pressure of 4.5 GPa to the surface, and the static load capacity at the surface. Fig. 3 shows a graph of relation between the maximum contact pressure at the surface of each of the sample 1 to the sample 6 and a value calculated by dividing the depth of the indentation by the diameter of the ceramic ball. The diameter of the ceramic ball was set to 3/8 inch (9.525 mm).

[Table 2]

Table 2

| Sample | Hardness at Surface (Hv) | Amount of Remaining $\gamma$ at Surface (Volume %) | Average Nitrogen Concentration at Surface (Mass %) | Depth of Indentation ($\mu$m) | Static Load Capacity (GPa) |
|---|---|---|---|---|---|
| 1 | 934 | 12.6 | 0.46 | 0.042 | 6.72 |
| 2 | 856 | 15.6 | 0.36 | 0.100 | 6.44 |
| 3 | 862 | 18.5 | 0.38 | 0.097 | 6.36 |
| 4 | 783 | 12.1 | 0.17 | 0.230 | 5.82 |
| 5 | 772 | 24.3 | 0.25 | 0.320 | 5.84 |
| 6 | 730 | 10.0 | 0.00 | 0.280 | 5.56 |

The average nitrogen concentration at the surface being equal to or more than 0.10 mass %, the hardness at the surface being equal to or more than 850 Hv, and the amount of retained austenite at the surface being equal to or less than 20 volume % are defined as a condition 1, a condition 2, and a condition 3, respectively. As shown in Table 2, the sample 1 to the sample 3 satisfied all of the condition 1, the condition 2, and the condition 3. On the other hand, the sample 4 to the sample 6 did not satisfy at least one of the condition 1, the condition 2, and the condition 3.

As shown in Table 1 and Fig. 3, in the sample 1 to the sample 3, the depth of the indentation at the time of application of the maximum contact pressure of 4.5 GPa to the surface was equal to or less than 0.2 $\mu$m and the static load capacity at the surface was equal to or more than 6.0 GPa. On the other hand, in the sample 4 to the sample 6, the depth of the indentation at the time of application of the maximum contact pressure of 4.5 GPa to the surface was more than 0.2 $\mu$m and the static load capacity at the surface was lower than 6.0 GPa. It was clarified also experimentally based on this comparison that the static load capacity at the surface was improved by satisfaction of the condition 1, the condition 2, and the condition 3.

A sample 1-1 to a sample 1-3, a sample 2-1 to a sample 2-3, and a sample 3-1 to a sample 3-3 were samples subjected to heat treatment similarly to the sample 1, the sample 2, and the sample 3, respectively. A sample 4-1 to a sample 4-4 are samples subjected to heat treatment similarly to the sample 4. A steel type and a shape of these samples were SUJ2 and a flat plate having a diameter of 85 mm $\times$ a thickness of 5 mm, respectively.

[Table 3]

Table 3

| Sample | Hardness at Surface (Hv) | Amount of Remaining γ at Surface (Volume %) | Average Nitrogen Concentration at Surface (Mass %) | Half Value Width of Martensite at Surface (°) | Peak Position in {220} Plane of Austenite at Surface (°) |
|---|---|---|---|---|---|
| 1-1 | 934 | 12.6 | 0.45 | 7.31 | 128.5 |
| 1-2 | 897 | 10.3 | 0.23 | 7.45 | 128.8 |
| 1-3 | 876 | 9.4 | 0.14 | 7.47 | 128.9 |
| 2-1 | 856 | 15.6 | 0.36 | 7.35 | 128.2 |
| 2-2 | 847 | 13.8 | 0.20 | 7.42 | 128.3 |
| 2-3 | 851 | 12.6 | 0.11 | 7.39 | 128.5 |
| 3-1 | 862 | 18.5 | 0.38 | 7.44 | 128.1 |
| 3-2 | 868 | 17.3 | 0.19 | 7.48 | 128.2 |
| 3-3 | 858 | 16.1 | 0.12 | 7.53 | 128.4 |
| 4-1 | 773 | 14.9 | 0.43 | 6.73 | 126.8 |
| 4-2 | 783 | 12.1 | 0.17 | 6.80 | 126.9 |
| 4-3 | 764 | 10.5 | 0.11 | 6.74 | 126.9 |
| 4-4 | 764 | 7.2 | 0.07 | 6.72 | 127.2 |

As shown in Table 3, the sample 1-1 to the sample 1-3, the sample 2-1 to the sample 2-3, and the sample 3-1 to the sample 3-3 satisfied all of the condition 1, the condition 2, and the condition 3. On the other hand, the sample 4-1 to the sample 4-4 did not satisfy at least one of the condition 1, the condition 2, and the condition 3.

In the sample 1-1 to the sample 1-3, the sample 2-1 to the sample 2-3, and the sample 3-1 to the sample 3-3, the half value width in the X-ray profile of martensite obtained by X-ray diffraction onto the surface was not smaller than 7.2° and not larger than 8.0° and the peak position indicating the {220} plane in the X-ray profile of austenite obtained by X-ray diffraction onto the surface was equal to or larger than 128°.

On the other hand, in the sample 4-1 to the sample 4-4, the half value width in the X-ray profile of martensite obtained by X-ray diffraction onto the surface was smaller than 7.2° and the peak position indicating the {220} plane in the X-ray profile of austenite obtained by X-ray diffraction onto the surface was smaller than 128°.

It was thus clarified based on this comparison that, when the condition 1, the condition 2, and the condition 3 were satisfied, the half value width in the X-ray profile of martensite obtained by X-ray diffraction onto the surface was not smaller than 7.2° and not larger than 8.0° and the peak position indicating the {220} plane in the X-ray profile of austenite obtained by X-ray diffraction onto the surface was equal to or larger than 128°.

From another point of view, it was clarified that, by performing sub zero treatment step S4 or cryogenic treatment step S7 without performing tempering step S5 at the high temperature, the dislocation density of martensite at the surface became higher and the half value width in the X-ray profile increased, and the dislocation density of austenite at the surface became higher and the peak position indicating the {220} plane was shifted toward a larger angle.

As shown in Table 4, in the sample 1, the sample 2, and the sample 3, the half value width in the X-ray profile of martensite obtained by X-ray diffraction onto the surface was not smaller than 7.2° and not larger than 8.0° and the peak position indicating the {220} plane in the X-ray profile of austenite obtained by X-ray diffraction onto the surface was equal to or larger than 128°. In addition, in the sample 1, the sample 2, and the sample 3, the dislocation density of martensite and the dislocation density of austenite at the surface were equal to or more than $1.1 \times 10^{15}$ m$^{-2}$ and equal to or more than $2.5 \times 10^{14}$ m$^{-2}$, respectively.

On the other hand, in the sample 4, the half value width in the X-ray profile of martensite obtained by X-ray diffraction onto the surface was smaller than 7.2° and the peak position indicating the {220} plane in the X-ray profile of austenite obtained by X-ray diffraction onto the surface was smaller than 128°. In addition, in the sample 4, the dislocation density of martensite and the dislocation density of austenite at the surface were less than $1.1 \times 10^{15}$ m$^{-2}$ and less than $2.5 \times 10^{14}$ m$^{-2}$, respectively.

[Table 4]

Table 4

| Sample | Half Value Width of Martensite at Surface (°) | Peak Position in {220} Plane of Austenite at Surface (°) | Dislocation Density of Martensite at Surface (m$^{-2}$) | Dislocation Density of Austenite at Surface (m$^{-2}$) |
|---|---|---|---|---|
| 1 | 7.31 | 128.5 | $1.37 \times 10^{15}$ | $4.01 \times 10^{14}$ |
| 2 | 7.35 | 128.2 | $1.30 \times 10^{15}$ | $3.69 \times 10^{14}$ |
| 3 | 7.44 | 128.1 | $1.34 \times 10^{15}$ | $3.03 \times 10^{14}$ |
| 4 | 6.80 | 126.9 | $9.98 \times 10^{14}$ | $2.46 \times 10^{14}$ |

Relation of the depth of the indentation at the time of application of the maximum contact pressure of 4.5 GPa to the surface with the amount of retained austenite (A: expressed in a unit of volume %) at the surface, the average nitrogen concentration (B: expressed in a unit of mass %) at the surface, and the dislocation density (C: expressed in a unit of m$^{-2}$) of austenite at the surface was subjected to multiple regression analysis. As a result of this multiple regression analysis, the depth (unit: μm) of the indentation at the time of application of the maximum contact pressure of 4.5 GPa to the surface was estimated in accordance with an expression $4.532+0.005 \times A-0.580 \times B-0.295 \times LogC$. A coefficient of determination ($R^2$) for this expression is 0.94. Therefore, when relation of $4.332+0.005 \times A-0.580 \times B-0.295 \times LogC \leq 0$ is satisfied, the depth of the indentation at the time of application of the maximum contact pressure of 4.5 GPa to the surface can be equal to or less than 0.2 μm.

Relation of the static load capacity at the surface with the amount of retained austenite (A: expressed in a unit of volume %) at the surface, the average nitrogen concentration (B: expressed in a unit of mass %) at the surface, and the dislocation density (D: expressed in a unit of m$^{-2}$) of martensite at the surface was subjected to multiple regression analysis. As a result of this multiple regression analysis, the static load capacity (unit: GPa) at the surface was estimated in accordance with an expression $-41.73-0.025 \times A-2.141 \times B+3.155 \times LogD$. The coefficient of determination ($R^2$) for this expression is 0.94. Therefore, when relation of $-47.73-0.025 \times A-2.141 \times B+3.155 \times LogD \geq 0$ is satisfied, the static load capacity at the surface can be equal to or more than 6.0 GPa.

(Another Exemplary Mechanical Component According to Embodiment)

An exemplary mechanical component according to the embodiment other than inner ring 10 will be described below.

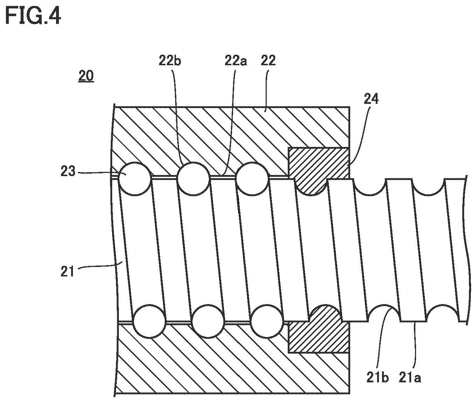

Fig. 4 is a cross-sectional view of a ball screw 20. As shown in Fig. 4, ball screw 20 includes a screw shaft 21, a ball nut 22, a plurality of balls 23, and a sealing member 24. A system of circulation of balls 23 in ball screw 20 is not particularly limited. The system of circulation of balls 23 in ball screw 20 is, for example, a tube system, a return tube (pipe) system, a deflector system, an end deflector system, an end cap system, an internal defector system, and the like.

Screw shaft 21 has an outer circumferential surface 21a. A thread 21b is provided in outer circumferential surface 21a. Ball nut 22 is provided with a hole that extends along a direction of a central axis of screw shaft 21. An inner wall surface of this hole is an inner circumferential surface 22a of ball nut 22. Inner circumferential surface 22a is provided with a thread 22b. Screw shaft 21 is inserted in ball nut 22 such that outer circumferential surface 21a is opposed to inner circumferential surface 22a. Ball 23 is arranged between thread 21b and thread 22b. The hole in ball nut 22 through which screw shaft 21 passes is closed by sealing member 24. Screw shaft 21 passes also through a hole provided in sealing member 24.

Screw shaft 21, ball nut 22, and ball 23 are formed of steel subjected to quenching and tempering. This steel contains at least 0.95 mass % and at most 1.10 mass % of carbon, less than 0.30 mass % of silicon, less than 0.50 mass % of manganese, less than 0.0080 mass % of sulfur, and at least 1.3 mass % and at most 1.6 mass % of chromium. A remainder of this steel is composed of iron and an inevitable impurity. This steel is, for example, bearing steel (SUJ2 defined under the JIS standards, 52100 defined under the ASTM standards, 100Cr6 defined under the ISO standards, GCr15 defined under the GB standards, and the like).

Screw shaft 21, ball nut 22, and ball 23 are each provided with nitrided layer 11 (not shown in Fig. 4) at a surface, and an average nitrogen concentration at the surface is equal to or more than 0.10 mass %. A hardness at the surface of each of screw shaft 21, ball nut 22, and ball 23 is equal to or more than 850 Hv. An amount of retained austenite at the surface of each of screw shaft 21, ball nut 22, and ball 23 is equal to or less than 20 volume %. In other words, screw shaft 21, ball nut 22, and ball 23 are mechanical components according to the embodiment.

Since ball screw 20 has an improved static load capacity at the surfaces of screw shaft 21, ball nut 22, and ball 23, it can also achieve a higher load capacity and reduction in size and weight. With reduction in size of ball screw 20, reduction in size also of a peripheral component or a structural member can also be achieved.

At least one of screw shaft 21, ball nut 22, and ball 23 should satisfy the composition of steel, the hardness at the surface, the concentration of nitrogen at the surface, and the amount of retained austenite at the surface described above. From another point of view, at least one of screw shaft 21, ball nut 22, and ball 23 of ball screw 20 should be the mechanical component according to the embodiment.

As screw shaft 21 is rotated around the central axis thereof, rotational motive power of screw shaft 21 is transmitted to ball nut 22 through ball 23, and ball nut 22 moves along the direction along the central axis of screw shaft 21. In other words, ball screw 20 is an apparatus that converts rotational motion of a motor or the like to linear motion. Ball screw 20 is used, for example, in an electric actuator, a positioning apparatus, an electric jack, a servo cylinder, an electric servo pressing machine, a mechanical pressing machine, an electric brake apparatus, a transmission, an electric power steering apparatus, an electric injection molding machine, and the like.

(Rolling Bearing 100 Including Inner Ring 10)

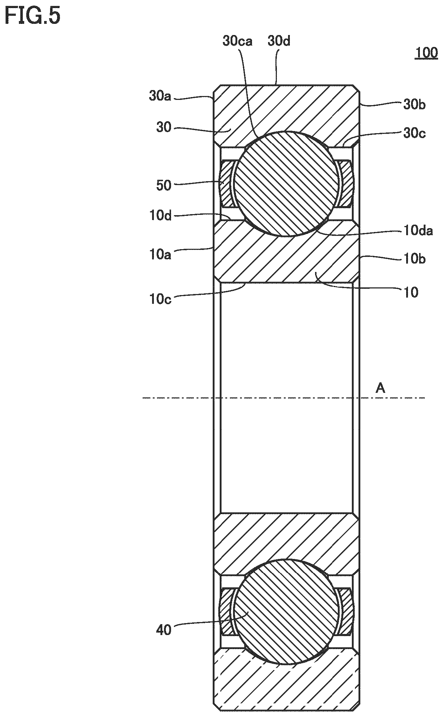

Fig. 5 is a cross-sectional view of a rolling bearing 100. As shown in Fig. 5, rolling bearing 100 includes inner ring 10, an outer ring 30, a plurality of rolling elements 40, and a retainer 50.

Outer ring 30 has a width surface 30a, a width surface 30b, an inner circumferential surface 30c, and an outer circumferential surface 30d. Width surface 30a and width surface 30b each form an end surface of outer ring 30 in the axial direction. Width surface 30b is a surface opposite to width surface 30a. Inner circumferential surface 30c and outer circumferential surface 30d extend along the circumferential direction. Inner circumferential surface 30c and outer circumferential surface 30d face toward central axis A and a side opposite to central axis A, respectively. Outer ring 30 is fitted to a housing (not shown) at outer circumferential surface 30d. Outer ring 30 is arranged on a radially outer side of inner ring 10 such that inner circumferential surface 30c is opposed to outer circumferential surface 10d.

Inner circumferential surface 30c has a raceway surface 30ca. Raceway surface 30ca is a portion of inner circumferential surface 30c that comes in contact with rolling element 40. Raceway surface 30ca is located in the center of inner circumferential surface 30c in the axial direction. Raceway surface 30ca extends along the circumferential direction. Inner circumferential surface 30c is recessed toward outer circumferential surface 30d in raceway surface 30ca. In a cross-sectional view orthogonal to the circumferential direction, raceway surface 30ca is, for example, in a form of a partial arc. Raceway surface 30ca is opposed to raceway surface 10da.

Rolling element 40 is, for example, spherical. Rolling element 40 is arranged between raceway surface 10da and raceway surface 30ca. The plurality of rolling elements 40 are aligned at intervals in the circumferential direction. Retainer 50 holds the plurality of rolling elements 40 such that an interval between two adjacent rolling elements 40 is within a certain range. Retainer 50 is arranged between outer circumferential surface 10d and inner circumferential surface 30c.

Outer ring 30 and rolling element 40 are, for example, mechanical components according to the embodiment. In other words, outer ring 30 and rolling element 40 are formed of steel subjected to quenching and tempering, and steel contains at least 0.95 mass % and at most 1.10 mass % of carbon, less than 0.30 mass % of silicon, less than 0.50 mass % of manganese, less than 0.0080 mass % of sulfur, at least 1.3 mass % and at most 1.6 mass % of chromium, and a remainder composed of iron and an inevitable impurity. Outer ring 30 and rolling element 40 each have the average nitrogen concentration at the surface not lower than 0.10 mass %, the hardness at the surface not lower than 850 Hv, and the amount of retained austenite at the surface not higher than 20 volume %. Outer ring 30 and rolling element 40 do not have to be the mechanical components according to the embodiment.

It should be understood that the embodiment disclosed herein is illustrative and non-restrictive in every respect. The scope of the present invention is defined by the terms of the claims rather than the embodiment above, and is intended to include any modifications within the scope and meaning equivalent to the terms of the claims.

REFERENCE SIGNS LIST

10 inner ring; 10a, 10b width surface; 10c inner circumferential surface; 10d outer circumferential surface; 10da raceway surface; 11 nitrided layer; 20 ball screw; 21 screw shaft; 21a outer circumferential surface; 21b thread; 22 ball nut; 22a inner circumferential surface; 22b thread; 23 ball; 24 sealing member; 30 outer ring; 30a, 30b width surface; 30c inner circumferential surface; 30ca raceway surface; 30d outer circumferential surface; 40 rolling element; 50 retainer; A central axis ; S1 preparation step; S2 nitriding treatment step; S3 quenching step; S4 sub zero treatment step; S5 tempering step; S6 post-treatment step; S7 cryogenic treatment step

**Claims**

1. A mechanical component having a surface, the mechanical component being made of steel subjected to quenching and tempering, the mechanical component comprising:

a nitrided layer formed at the surface, wherein
the steel contains at least 0.95 mass % and at most 1.10 mass % of carbon, less than 0.30 mass % of silicon, less than 0.50 mass % of manganese, less than 0.0080 mass % of sulfur, at least 1.3 mass % and at most 1.6 mass % of chromium, and a remainder composed of iron and an inevitable impurity,
an average nitrogen concentration at the surface is equal to or more than 0.10 mass %,
a hardness at the surface is equal to or more than 850 Hv, and
an amount of retained austenite at the surface is equal to or less than 20 volume %.

2. The mechanical component according to claim 1, wherein

a half value width in an X-ray profile of martensite obtained by X-ray diffraction onto the surface is not smaller than 7.2° and not larger than 8.0°, and
a peak position indicating a {220} plane in an X-ray profile of austenite obtained by X-ray diffraction onto the surface is equal to or larger than 128°.

3. The mechanical component according to claim 1, wherein

a dislocation density of martensite at the surface is equal to or more than $1.1 \times 10^{15}$ m$^{-2}$, and
a dislocation density of austenite at the surface is equal to or more than $2.5 \times 10^{14}$ m$^{-2}$.

4. The mechanical component according to claim 1, wherein
relation of $4.332+0.005 \times A-0.580 \times B-0.295 \times LogC \leq 0$ is satisfied, where A (unit: volume %) represents the amount of retained austenite at the surface, B (unit: mass %) represents the average nitrogen concentration at the surface, and C (unit: m$^{-2}$) represents a dislocation density of austenite at the surface.

5. The mechanical component according to claim 1, wherein
relation of $-47.73-0.025 \times A-2.141 \times B+3.155 \times LogD \geq 0$ is satisfied, where A (unit: volume %) represents the amount of retained austenite at the surface, B (unit: mass %) represents the average nitrogen concentration at the surface, and D (unit: m$^{-2}$) represents a dislocation density of martensite at the surface.

6. The mechanical component according to claim 1, wherein
a depth of an indentation formed in the surface when a maximum contact pressure of 4.5 GPa is applied to the surface is equal to or less than 0.2 $\mu$m.

7. The mechanical component according to claim 1, wherein
a static load capacity at the surface is equal to or more than 6.0 GPa.

FIG.1

FIG.2

S1 — PREPARATION STEP

S2 — NITRIDING TREATMENT STEP

S3 — QUENCHING STEP

S4
(S7) — SUB ZERO TREATMENT STEP
(CRYOGENIC TREATMENT STEP)

S5 — TEMPERING STEP

S6 — POST−TREATMENT STEP

FIG.3

DEPTH OF
INDENTATION
÷
DIAMETER OF
CERAMIC BALL

MAXIMUM CONTACT PRESSURE
AT SURFACE (GPa)

● SAMPLE 1    + SAMPLE 4
▲ SAMPLE 2    ◆ SAMPLE 5
△ SAMPLE 3    □ SAMPLE 6

FIG.4

FIG.5

## INTERNATIONAL SEARCH REPORT

| International application No. |
|---|
| **PCT/JP2023/010144** |

### A. CLASSIFICATION OF SUBJECT MATTER

***C22C 38/00***(2006.01)i; ***C21D 1/06***(2006.01)i; ***C21D 1/18***(2006.01)i; ***C21D 9/40***(2006.01)i; ***C22C 38/18***(2006.01)i; ***F16C 33/62***(2006.01)i; ***F16C 33/64***(2006.01)i

FI:   C22C38/00 301N; C22C38/18; C21D1/06 A; F16C33/62; F16C33/64; C21D1/18 Y; C21D9/40 A

According to International Patent Classification (IPC) or to both national classification and IPC

### B. FIELDS SEARCHED

Minimum documentation searched (classification system followed by classification symbols)

C22C38/00; C21D1/06; C21D1/18; C21D9/40; C22C38/18; F16C33/62; F16C33/64

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2006-322017 A (NSK LTD) 30 November 2006 (2006-11-30)<br>entire text, all drawings | 1-7 |
| A | JP 2008-196033 A (NTN CORP) 28 August 2008 (2008-08-28)<br>entire text, all drawings | 1-7 |
| P, A | JP 2022-170860 A (NTN CORP) 11 November 2022 (2022-11-11)<br>entire text, all drawings | 1-7 |
| E, A | JP 2023-47716 A (NTN CORP) 06 April 2023 (2023-04-06)<br>entire text, all drawings | 1-7 |

☐ Further documents are listed in the continuation of Box C.      ☑ See patent family annex.

| | |
|---|---|
| *     Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **24 May 2023** | **06 June 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT

Information on patent family members

International application No.

**PCT/JP2023/010144**

| Patent document cited in search report | | | Publication date (day/month/year) | Patent family member(s) | Publication date (day/month/year) |
|---|---|---|---|---|---|
| JP | 2006-322017 | A | 30 November 2006 | (Family: none) | |
| JP | 2008-196033 | A | 28 August 2008 | (Family: none) | |
| JP | 2022-170860 | A | 11 November 2022 | WO 2022/230979 A1 entire text, all drawings | |
| JP | 2023-47716 | A | 06 April 2023 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013119930 A